# EUROPÄISCHE PATENTSCHRIFT

(11) **EP 2 492 237 B1**
(45) Veröffentlichungstag und Bekanntmachung des Hinweises auf die Patenterteilung: **14.05.2014**
(21) Anmeldenummer: 12002064.9
(22) Anmeldetag: 10.09.2008
(51) Int. Cl.: B66F 9/075, B62B 3/06, B62B 5/00, B60K 1/04

(54) **Batteriebetriebenes Flurförderzeug**
Battery-powered industrial truck
Chariot de manutention fonctionnant sur batterie

(30) Priorität: 22.09.2007 DE 102007045435
(43) Veröffentlichungstag der Anmeldung: 29.08.2012
(62) Teilanmeldung aus: 08015915.5
(73) Patentinhaber: Jungheinrich Aktiengesellschaft, 22047 Hamburg (DE)
(72) Erfinder: Grothkopp, Hartwig, 22523 Hamburg (DE); Magens, Ernst-Peter, 22949 Ammersbek (DE); Weber, Christoph, 24558 Henstedt-Ulzburg (DE); Mänken, Frank, 24558 Henstedt-Ulzburg (DE); Knie, Andreas, 20255 Hamburg (DE)
(74) Vertreter: Hauck Patent- und Rechtsanwälte

(56) Entgegenhaltungen:
- EP-A1- 0 936 178
- EP-A1- 1 457 403
- WO-A-2006/130419
- DE-A1-102005 060 095

## Beschreibung

Die Erfindung bezieht sich auf ein batteriebetriebenes Flurförderzeug nach Patentanspruch 1.

Die Energiequellen von Elektroflurförderzeugen sind bekanntlich Batterien. Standardmäßig werden Bleisäurebatterien verwendet. Es sind auch Ausführungen bekannt geworden, bei denen zwei derartige Batterien im Flurförderzeug angeordnet sind. Die Bleisäurebatterien sind in sogenannten Batterietrögen aufgenommen, die an geeigneten Stellen im Flurförderzeug so angeordnet sind, dass sie für einen Wechsel und Wartung ohne weiteres zugänglich sind. Bei sogenannten Schubmaststaplern ist der Batterietrog zwischen Lastteil und verschiebbarem Hubgerüst angeordnet. Bei anderen Flurförderzeugen ist der Batterietrog seitlich in eine entsprechende Ausnehmung im Gehäuse des Antriebs- oder Lastteils eingeschoben. Es sind auch Ausführungsformen bekannt, bei denen der Batterietrog nach oben entnommen wird, nachdem zuvor eine Abdeckhaube aufgeklappt wird. Insgesamt kann festgestellt werden, dass die konstruktive Konzeption eines Flurförderzeugs sich stark nach den Abmessungen der Batterie richtet, da sie ein verhältnismäßig großes Volumen des Fahrzeugs einnimmt.

Das Aufladen von Bleisäurebatterien dauert in der Regel mehrere Stunden, so dass bei einem Mehrschichteinsatz des Flurförderzeugs zwecks Aufladung ein Wechsel der Batterie vorgenommen werden muss. Aus diesem Grund ist, wie bereits erwähnt, der Batterietrog an gut zugänglichen Positionen im Flurförderzeug angeordnet.

Bei einem Flurförderzeug ist seine Wendigkeit von entscheidender Bedeutung. Als Merkmal für die Wendigkeit dient das sogenannte L2-Maß, dem Abstand zwischen Fahrzeugvorderseite und Gabelrücken. Bei vielen Flurförderzeugen verlängert sich das L2-Maß um die Breite des Batterietroges.

Aus der Druckschrift FR 1 401 140 A ist ein Schubmaststapler mit einem Fahrersitz bekannt geworden, bei dem die Batterien unterhalb der Füße des Fahrers und seitlich des Hubgerüsts angeordnet sind. Oberhalb der Batterien befindet sich eine Lenksäule, die schwenkbar ausgeführt ist, um das Auswechseln der Batterien zu vereinfachen.

Aus der Druckschrift DE 10 2005 060 095 A1 ist ein Flurförderzeug mit den Merkmalen des Oberbegriffs des Anspruchs 1 bekannt geworden.

Der Erfindung liegt die Aufgabe zugrunde, ein batteriebetriebenes Flurförderzeug zu schaffen, dessen Längenmaß gar nicht oder nur unwesentlich von der Batterie beeinflusst wird.

Diese Aufgabe wird durch die Merkmale des Patentanspruchs 1 gelöst.

Bei dem erfindungsgemäßen batteriebetriebenen Flurförderzeug sind zwei oder mehr einzelne Batteriezellen einer wartungsfreien Batterie in vorhandenen Hohlräumen oder anderen schwer zugänglichen Orten des Flurförderzeugs nicht oder schwer ausbaubar angeordnet bzw. integriert, wobei mindestens eine Batteriezelle unterhalb einer Standplattform oder eines Fahrersitzes eingebaut ist.

Die Erfindung geht von der Erkenntnis aus, dass neue Batterietechnologien zur Verfügung stehen, die im Hinblick auf Größe, Gewicht, Schnellladefähigkeit und Lebensdauer Vorteile gegenüber herkömmlichen Bleisäurebatterien aufweisen. Sie haben außerdem den Vorteil, dass sie wartungsfrei sind. Sie können daher ohne weiteres an nicht oder schwer zugänglichen Orten im Flurförderzeug untergebracht werden. Entscheidend ist lediglich, dass sie zugängliche Kontakte für ein Ladekabel aufweisen, über das sie - ohne ausgebaut zu werden - geladen werden. Des Weiteren sind Kontakte als Schnittstelle zur gesamten Fahrzeugelektronik vorgesehen.

Batterien der angesprochenen Art ermöglichen auch die Aufteilung in mehrere oder beliebige Batteriezellen, die an verschiedenen Orten am Flurförderzeug platziert werden können. Entscheidend ist lediglich, dass sie zusammen den erforderlichen Nennstrom bereitstellen, um das Flurförderzeug zu betreiben.

Ein Wechsel der Batterie ist bei der Erfindung nicht nötig. Die Batterie bleibt ständig am Einbauort, auch beim Ladevorgang.

Vorteilhafte Ausgestaltungen der Erfindung sind in den Unteransprüchen angegeben.

Nach einer Ausgestaltung der Erfindung ist vorgesehen, dass die Batteriezellen an verschiedenen voneinander entfernt liegenden Orten eingebaut sind. So können geeignete Hohlräume, die bei einem Flurförderzeug herkömmlichen Aufbaus vorhanden sind, dazu genutzt werden, eine oder mehrere Batteriezellen aufzunehmen. So kann mindestens eine Batteriezelle innerhalb der Verkleidung des Antriebsteils angeordnet sein.

Die wartungsfreien Batterien haben im Übrigen den Vorteil, dass sie nicht unbedingt an vorgegebene geometrische Abmessungen gebunden sind, sondern dazu in ihrer Kontur frei gestaltet werden können. Daher können derartige Batterien an den Einbauort angepasst werden und es ist nicht wie herkömmlich erforderlich, einen geeigneten Einbauort vorgegebener Abmessung bereitzustellen.

Ein Einbauort befindet sich bei der Erfindung unterhalb einer Standplattform oder eines Fahrersitzes des Flurförderzeugs.

Bei einem nicht zur Erfindung zählenden Beispiel kann mindestens eine Batteriezelle in einem Hubgerüst eingebaut sein. Sie kann im festen Teil des Hubgerüsts eingebaut sein, das mit dem Chassis des Antriebsteils verbunden ist. Alternativ oder zusätzlich kann mindestens eine Batteriezelle im beweglichen Teil des Hubgerüsts eingebaut werden. Unter Hubgerüst soll hier jede Anordnung und Ausbildung eines Lastteils eines Flurförderzeugs verstanden werden, an dem ein Lasttragmittel angebracht bzw. höhenverstellbar gelagert ist. Bei Hochhubfahrzeugen ist gegebenenfalls wenig Einbauraum für Batteriezellen vorhanden. Dort kommt z.B. auch ein An- oder Einbau in einem Gabelträger in Frage. Bei Niederhubfahrzeugen ist ein Lastrahmen mit dem Lasttragmittel zusammen um eine geringe Hubhöhe anhebbar. Bei Hochhubflurförderzeugen ist ein aus einem oder mehreren Masten bestehendes Hubgerüst vorgesehen, wobei eine Lastgabel am jeweils inneren Mast höhenverstellbar gelagert ist und die teleskopierbaren Masten in einem Standmast geführt und gehalten sind. Bei beliebiger Ausgestaltung der Hubgerüstarten können Batteriezellen überall dort eingebaut werden, wo ausreichend Platz vorhanden und die Durchsicht - bei Hochhubgerüsten - nicht beeinträchtigt ist.

In einem anderen Beispiel ist das Hubgerüst ein Lastrahmen, der mit Hilfe eines Hubantriebs im Antriebsteil in der Höhe verstellbar ist (Freihub). Mindestens eine Batteriezelle ist in dem Lastrahmen eingebaut. Vorzugsweise ist eine Reihe von Batteriezellen im unteren Teil des Lastrahmens eingebaut.

Wie schon erwähnt, ist die Batterie bei der Erfindung wartungsfrei und braucht daher während der üblichen Standzeit des Flurförderzeugs nicht ausgebaut und/oder gewartet zu werden. Da die Batterien Schnellladebatterien sind, braucht es nur geringe Ladezeiten, um leere Batterien wieder aufzuladen. Auch das Gewicht derartiger wartungsfreier Batterien ist gegenüber herkömmlichen Bleisäurebatterien deutlich verringert, so dass ihrer Anordnung im Hubgerüst, insbesondere am beweglichen Teil keinen Problemen begegnet.

Vorzugsweise sind Lithiumzellen als Batterien bei der Erfindung geeignet. Es sind jedoch auch andere wartungsfreie Batterien mit Vorteil verwendbar.

Die Erfindung wird nachfolgend anhand einer Zeichnung, die die erfindungsgemäße Anordnung der Batteriezellen nicht zeigt, näher erläutert.

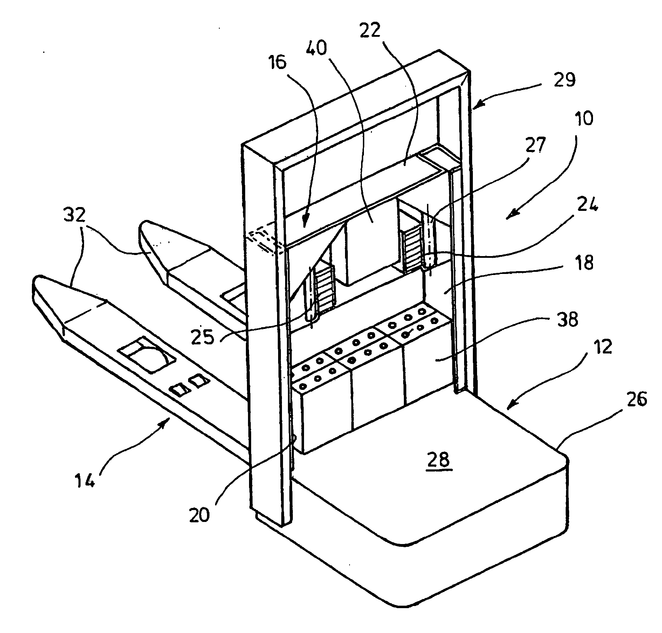

Die einzige Figur zeigt schematisch eine Perspektivansicht eines Niederhubflurförderzeugs in schematischer Darstellung.

In der Figur ist ein Niederhubwagen 10 dargestellt mit einem Antriebsteil 12 und einem Lastteil 14. Das Lastteil 14 weist einen rechteckigen Lastrahmen 16 auf mit seitlichen Stützen 18, 20 und einer oberen Verbindungsstrebe 22. Der Antriebsteil 12 weist mindestens ein lenkbares Antriebsrad auf (nicht sichtbar) sowie ein Gehäuse 26, das Antriebs- und Lenkaggregate aufnimmt (nicht gezeigt). Die Oberseite bildet eine Standplattform 28 für einen Fahrer im Mitfahrbetrieb. Er kann sich an zwei parallelen Armlehnen halten (nicht gezeigt), in denen auch Bedienelemente zur Betätigung des Flurförderzeugs 10 untergebracht sein können (nicht gezeigt).

Mit dem Lastrahmen 16 ist eine Lastgabel fest verbunden, die bei 32 angedeutet ist. Rahmen 16 und Lastgabel 32 können durch zwei parallel angeordnete elektrische Hubvorrichtungen um einen sogenannten Freihub angehoben werden. Die elektrischen Aktuatoren 24, 25 sind an einer nicht gezeigten Wand des Antriebsteils befestigt und ihre Spindel 27 greift an der Verbindungsstrebe 22 an. Ein dem Lastrahmen übergestülpter Mast 29, der am Antriebsteil 16 befestigt ist, hält an der Innenseite U-Profile 31, 33 zur Führung des Lastrahmens 16. Ein Koppelgestänge zwischen dem Lastrahmen 16 und dem Antriebsteil 12 sorgt dafür, dass Räder, die in den Gabelarmen gelagert sind, nach unten gefahren werden. Ein derartiger Koppelmechanismus ist ebenfalls bekannt und soll daher nicht im Einzelnen beschrieben werden.

Wie in der Figur ferner zu erkennen, sind im unteren Bereich des Lastrahmens 16 zwei Reihen von jeweils drei Batteriezellen 38 angeordnet. Eine weitere Batteriezelle 40 ist im oberen Bereich des Lastrahmens 16 angeordnet und an der Verbindungsstrebe angehängt. Die sieben Batteriezellen ergeben in Reihe die erforderliche Nennspannung des Fahrzeuges, um das Flurförderzeug 10 in bekannter Art und Weise zu betreiben. Die Batteriezellen sind z.B. Lithiumzellen, welche sich durch ein relativ geringes Gewicht, Wartungsfreiheit, lange Lebensdauer und Schnellladefähigkeit auszeichnen.

Es ist natürlich denkbar, anstelle der Anordnung der Batteriezellen 38, 40 im Lastrahmen 16 diese an der Vorderseite zwischen Lastrahmen 16 und Chassis des Antriebsteils 12 ganz oder teilweise anzuordnen. In diesem Fall werden sie beim Anheben des Lastrahmens 16 nicht mit angehoben, was bei dem gezeigten Beispiel der Fall ist.

## Patentansprüche

1. Batteriebetriebenes Flurförderzeug mit einer Batterie, die zwei oder mehr einzelne Batteriezellen (38, 40) aufweist, **dadurch gekennzeichnet, dass**
- die Batteriezellen wartungsfrei sind,
- die Batteriezellen in nur schwer zugänglichen Hohlräumen für den Ladebetrieb nicht auswechselbar angeordnet sind, und
- mindestens eine der Batteriezellen unterhalb einer Standplattform oder eines Fahrersitzes eingebaut ist.

2. Flurförderzeug nach Anspruch 1, **dadurch gekennzeichnet, dass** die Batteriezellen (38) an verschiedenen, voneinander entfernten Orten eingebaut sind.

3. Flurförderzeug nach Anspruch 1 oder 2, **dadurch gekennzeichnet, dass** als Batteriezellen (38, 40) Lithiumzellen vorgesehen sind.

## Claims

1. A battery-powered industrial truck with a battery which has two or more individual battery cells (38, 40), **characterised in that**
• the battery cells are maintenance-free,
• the battery cells are arranged in cavities that are accessible only with difficulty, so as to be not replaceable for the charging operation, and
at least one of the battery cells is installed below a standing platform or a seat for the operator.

2. The industrial truck according to claim 1, **characterised in that** the battery cells (38) are installed at different locations which are distant from each other.

3. The industrial truck according to claim 1 or 2, **characterised in that** lithium cells are provided as battery cells (38, 40).

## Revendications

1. Chariot de manutention fonctionnant sur batterie, avec une batterie qui a deux ou plus éléments de batterie (38, 40) individuels, **caractérisé en ce que**
• les éléments de batterie ne nécessitent pas aucune maintenance,
• les éléments de batterie sont disposés dans des cavités accessibles seulement avec difficulté, de sorte qu'ils ne sont pas interchangeables pour l'opération de mise en charge, et
• au moins un des éléments de batterie est installé au-dessous d'une plate-forme ou un siège pour l'opérateur.

2. Chariot de manutention selon la revendication 1, **caractérisé en ce que** les éléments de batterie (38) sont installées dans des endroits différents qui sont distants l'un de l'autre.

3. Chariot de manutention selon la revendication 1 ou 2, **caractérisé en ce que** des piles au lithium sont prévues comme éléments de batterie (38, 40).
